# FASCICULE DE BREVET EUROPEEN

(11) **EP 4 217 832 B1**
(45) Date de publication et mention de la délivrance du brevet: **15.10.2025**
(21) Numéro de dépôt: 21782513.2
(22) Date de dépôt: 21.09.2021
(51) Int. Cl.: G06F 3/01, G06F 3/0354, G06F 3/041

(54) **DISPOSITIF D'AFFICHAGE**
ANZEIGEVORRICHTUNG
DISPLAY DEVICE

(30) Priorité: 22.09.2020 FR 2009602
(43) Date de publication de la demande: 02.08.2023
(73) Titulaire: Valeo Comfort and Driving Assistance, 94000 Créteil (FR)
(72) Inventeur: KORCZAK, Stephane, 94000 Créteil (FR); IRZYK, Michael, 94000 Créteil (FR); MUSAT, Ciprian, 94000 Créteil (FR); CORDUAN, Patrick, 94000 Créteil (FR); EL OUARDI, Nour Eddine, 94000 Créteil (FR)
(74) Mandataire: Delplanque, Arnaud
(86) Numéro de dépôt international: PCT/EP2021/075987
(87) Numéro de publication internationale: WO 2022/063799

(56) Documents cités:
- EP-A1- 1 691 263
- EP-A1- 3 637 233
- WO-A1-2020/157231
- KR-A- 20180 078 121
- US-A1- 2006 140 437

## Description

### DOMAINE TECHNIQUE DE L'INVENTION

La présente invention concerne de manière générale le domaine des dispositifs d'affichage d'informations, notamment au sein des véhicules (en particulier les véhicules automobiles).

Elle concerne plus particulièrement un dispositif d'affichage à retour haptique pour planche de bord de véhicule.

### ARRIERE-PLAN TECHNOLOGIQUE

Les dispositifs d'affichage utilisant des écrans sont de plus en plus présents dans les véhicules, notamment les véhicules automobiles. Intégrés dans la planche de bord, les écrans peuvent être utilisés pour visualiser des informations relatives au fonctionnement du véhicule ou à un trajet emprunté, par exemple la climatisation, la radio ou le GPS. De plus, ces écrans possèdent souvent une fonction tactile et peuvent alors être utilisés par un utilisateur comme une interface pour interagir avec le véhicule, ce qui permet de s'affranchir de boutons poussoirs.

On assiste à une montée en gamme de ces écrans tactiles avec l'ajout de prestations supplémentaires comme le retour haptique suite à un appui sur l'écran.

Pour être correctement perçu par l'utilisateur, le retour haptique doit satisfaire certaines contraintes comme un déplacement minimum et/ou une accélération minimum de la surface en contact avec le doigt de l'utilisateur. Classiquement, une vibration efficace est réalisée en utilisant de multiples actionneurs mécaniques ou des actionneurs mécaniques de grande taille.

Cependant le volume disponible pour l'intégration de ces écrans dans la planche de bord est souvent limité.

EP 3 637 233 A1 divulgue un appareil d'affichage.

### PRESENTATION DE L'INVENTION

Dans ce contexte, on propose selon l'invention un dispositif d'affichage comprenant un verre de façade ; un dispositif de rétro-éclairage, conçu pour générer un faisceau lumineux source ; un modulateur, solidaire dudit verre de façade et situé entre ledit verre de façade et ledit dispositif de rétro-éclairage de manière à recevoir ledit faisceau lumineux source et à transmettre un faisceau lumineux modulé à travers ledit verre de façade ; et au moins un actionneur mécanique comprenant une première partie et une seconde partie mobiles l'une par rapport à l'autre, la première partie étant au contact du dispositif de rétroéclairage et la seconde partie étant liée au verre de façade ; ledit actionneur mécanique étant disposé de façon à pouvoir déplacer ledit verre de façade par rapport audit dispositif de rétro-éclairage.

Ainsi, grâce à l'invention, le ou les actionneurs mécaniques peuvent mettre en mouvement une partie seulement du dispositif d'affichage, comprenant le verre de façade et le modulateur, par rapport au dispositif de rétro-éclairage. Il est donc possible de ne pas déplacer l'ensemble du dispositif d'affichage pour assurer un retour haptique mais seulement une partie de celui-ci.

Par conséquent, la masse à faire vibrer, c'est-à-dire à déplacer, est beaucoup plus faible que la masse totale du dispositif d'affichage. Puisque la masse à déplacer est faible, on peut prévoir des actionneurs de petite taille ou en nombre réduit, tout en satisfaisant les contraintes d'accélération et de déplacement minimum de la surface du dispositif d'affichage qui est en contact avec le doigt de l'utilisateur.

De fait, il est possible d'intégrer un tel dispositif d'affichage comme écran tactile à retour haptique dans des espaces réduits.

D'autres caractéristiques non limitatives et avantageuses du dispositif d'affichage conforme à l'invention, prises individuellement ou selon toutes les combinaisons techniquement possibles, sont les suivantes :
- ledit actionneur mécanique est un actionneur piézoélectrique ;
- un premier élément de liaison fixé par une première partie audit actionneur mécanique et fixé par une seconde partie audit verre de façade ;
- ledit premier élément de liaison possède un profil formant deux bras en équerre, ledit actionneur mécanique étant fixé à un premier bras et ledit verre de façade étant fixé à un second bras ;
- ledit modulateur est collé audit verre de façade par un adhésif optique ;
- le dispositif d'affichage comprend en outre : au moins un second élément de liaison fixé audit verre de façade ; et au moins un ressort, en contact par une première extrémité avec ledit dispositif de rétro-éclairage et par une seconde extrémité avec ledit second élément de liaison, de manière à pré-contraindre ledit actionneur mécanique et/ou à ramener ledit verre de façade à une position d'équilibre ;
- ledit second élément de liaison possède un profil en équerre ;
- un élément de protection est disposé en périphérie dudit dispositif de rétro-éclairage, entre ledit dispositif de rétro-éclairage et ledit verre de façade ;
- ledit dispositif de rétro-éclairage comprend un carter en magnésium ;
- une surface en téflon est située entre ledit actionneur mécanique et ledit dispositif de rétro-éclairage ;
- ledit dispositif d'affichage comprend un élément souple conçu pour relier ledit verre de façade à une structure et pour permettre le mouvement dudit verre de façade par rapport à ladite structure ;
- ledit élément souple est réalisé dans un matériau appartenant au groupe constitué : du silicone ;
- ledit élément souple est agencé de manière à rester dans un régime de déformation élastique lorsque ledit verre de façade subit une accélération d'au moins 6 G et un déplacement d'au moins 100 micromètres par rapport à ladite structure ;
- au moins un capteur est disposé entre ledit verre de façade et ladite structure, et est conçu pour mesurer une force exercée sur ledit verre de façade.

### DESCRIPTION DES MODES DE REALISATION

La description qui va suivre en regard des dessins annexés, donnés à titre d'exemples non limitatifs, fera bien comprendre en quoi consiste l'invention et comment elle peut être réalisée.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Sur les dessins annexés :
[Fig. 1] est une vue schématique en coupe d'un dispositif d'affichage selon l'invention ;
[Fig. 2] est une vue schématique du dispositif d'affichage de la figure 1 assemblé avec une structure ;
[Fig. 3] est une vue schématique de dessus d'un actionneur mécanique du dispositif d'affichage de la figure 1 ou de la figure 2 ; et
[Fig. 4] est une vue schématique en coupe d'une partie d'un dispositif d'affichage selon l'invention.

Bien entendu, diverses autres modifications peuvent être apportées à l'invention dans le cadre des revendications annexées.

Dans ce document, un dispositif d'affichage 1 est décrit dans le cas où il est utilisé en tant qu'écran tactile à retour haptique au sein d'un véhicule automobile, par exemple pour qu'un utilisateur puisse visualiser des informations relatives au fonctionnement du véhicule et interagir avec le véhicule. Le dispositif d'affichage 1 peut par exemple être intégré dans une planche de bord du véhicule. Dans ce cas, le dispositif d'affichage 1 possède une surface extérieure orientée vers l'utilisateur situé dans un habitacle du véhicule. La surface extérieure est de plus conçue pour être mise en contact avec l'utilisateur, en pratique avec le doigt de l'utilisateur. Le dispositif d'affichage 1 peut toutefois s'appliquer également à toute autre utilisation envisageable d'un écran à retour haptique.

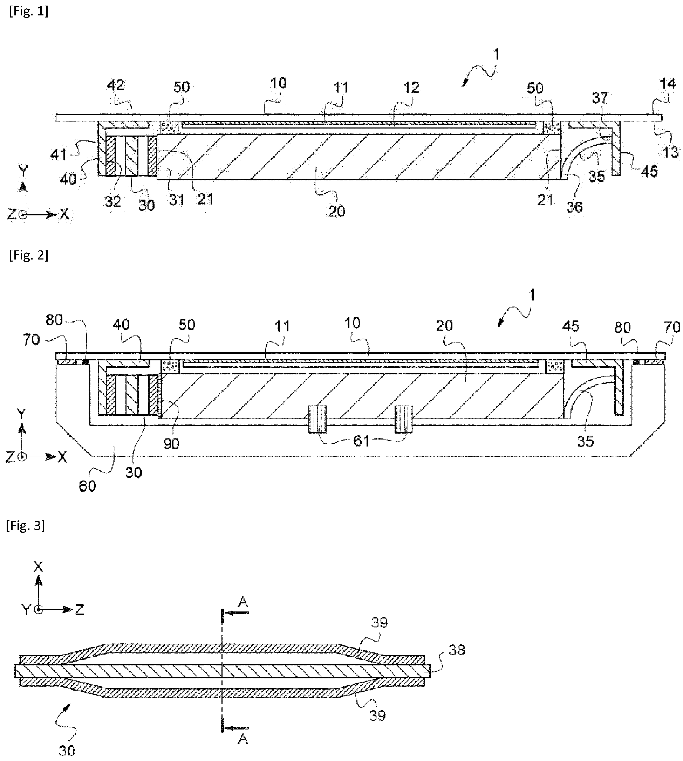

Comme le montre la figure 1, le dispositif d'affichage 1 comprend :
- un verre de façade 10 ;
- un dispositif de rétro-éclairage 20 ;
- un modulateur 12 ; et
- au moins un actionneur mécanique 30.

Dans le mode de réalisation décrit, le verre de façade 10 s'étend dans un plan, appelé plan de référence. Ici, le plan de référence est le plan XZ de la figure 1. Ici, le verre de façade 10 a globalement une forme de parallélépipède aplati, cela signifie notamment que son épaisseur, ici la dimension selon la direction Y, est très nettement inférieure à sa largeur et à sa longueur, ici les deux dimensions dans le plan de référence XZ. Le verre de façade 10 peut par exemple avoir dans le plan de référence XZ les dimensions d'un écran 14 pouces, par exemple 31 cm de longueur et 17,4 cm de largeur et une épaisseur de quelques millimètres, par exemple de 1 mm à 5 mm. En pratique, la forme du verre de façade 10 dans le plan de référence XZ peut être adaptée à la forme de la planche de bord.

Le verre de façade 10 est une lame de verre transparente ou quasi-transparente. En effet, le verre de façade 10 est adapté à être traversé par un faisceau lumineux sans déformer ou atténuer substantiellement ce dernier. Ce faisceau lumineux, appelé faisceau lumineux modulé, pénètre par une face arrière 13 et ressort par une face avant 14, opposée à la face arrière 13, en direction de l'utilisateur. Le faisceau lumineux modulé permet de transmettre des informations, par exemple sous forme d'images, à l'utilisateur, par exemple sur l'état du véhicule. Ici, la face avant 14 correspond à la surface extérieure du dispositif d'affichage 1.

Le dispositif de rétro-éclairage 20 est conçu pour générer un faisceau lumineux source vers le verre de façade 10, plus précisément vers la face arrière 13 du verre de façade 10. Comme le montre la figure 1, le dispositif de rétro-éclairage 20 a globalement une forme de parallélépipède dont l'épaisseur est inférieure à la largeur et à la longueur.

Ici, le dispositif de rétro-éclairage 20 génère un faisceau lumineux source polychromatique de manière à former des images en couleurs pour l'utilisateur. En variante, le dispositif de rétro-éclairage pourrait générer un faisceau lumineux source monochromatique pour former des images monochromatiques.

D'une façon remarquable, on peut prévoir que le dispositif de rétro-éclairage 20 comprenne un carter de protection en magnésium pour lui assurer une rigidité élevée. Pour générer le faisceau lumineux source, le dispositif de rétro-éclairage 20 peut par exemple comprendre des diodes électroluminescentes.

Le dispositif de rétro-éclairage 20 est situé en vis-à-vis du verre de façade 10 à une faible distance du verre de façade 10, typiquement entre 0,5 mm et 5 mm. Sur la figure 1, la partie du dispositif de rétro-éclairage 20 qui fait face au verre de façade 10 est plane. En variante, pour être située au plus près du verre de façade 10, cette partie pourrait posséder un renfoncement adapté à la forme du modulateur 12.

Comme le montre la figure 1, le modulateur 12 est situé (c'est-à-dire interposé) entre le dispositif de rétro-éclairage 20 et le verre de façade 10. Le modulateur 12 a la forme d'un film qui s'étend dans le plan de référence XZ. Le modulateur 12 est fixé au verre de façade 10. Ici, le modulateur 12 est collé au verre de façade 10 par un adhésif optique 11, par exemple une résine optique, par exemple en silicone. Le modulateur 12 est séparé du dispositif de rétro-éclairage 20 par un interstice.

Le modulateur 12 est constitué d'une matrice d'éléments dont la transmittance varie dans le temps. Chaque élément de la matrice défini un pixel du dispositif d'affichage 1. Le modulateur 12 reçoit le faisceau lumineux source et transmet le faisceau lumineux modulé en direction du verre de façade 10. Grâce à sa matrice d'éléments, le modulateur 12 module spatialement le faisceau lumineux source de manière à former le faisceau lumineux modulé.

Ici, le modulateur 12 est un écran à cristaux liquides de type TFT (de l'anglais « thin film transistor »), c'est-à-dire une matrice de cellules à cristaux liquides commandées chacune par un transistor en film mince (d'où le nom de l'écran dit TFT). Pour chaque pixel, trois cellules, chacune associée à un filtre coloré, par exemple un pour le bleu, un pour le vert et un pour le rouge, permettent de contrôler la transmittance, en orientant les cristaux liquides, de façon stable et avec un faible temps de réponse.

En variante, le faisceau lumineux source pourrait être produit par des micro-LEDs ou par des diodes électroluminescentes organiques.

Le dispositif d'affichage 1 décrit ici comprend un seul actionneur mécanique 30. Bien entendu, le dispositif d'affichage 1 peut comprendre plusieurs actionneurs mécaniques 30 qui peuvent être orientés selon des directions distinctes. Cependant, le dispositif d'affichage 1 permet de réaliser un retour haptique efficace avec uniquement un actionneur mécanique 30, même de petite taille.

L'actionneur mécanique 30 est une pièce dont la forme peut varier. Selon l'invention l'actionneur mécanique 30 comprend deux parties 31, 32 mobiles l'une par rapport à l'autre. L'actionneur mécanique 30 est disposé de façon à pouvoir déplacer le verre de façade 10 par rapport au dispositif de rétro-éclairage 20. Pour ce faire, selon l'invention, une première partie 31 de l'actionneur mécanique 30 est au contact du dispositif de rétro-éclairage 20, par exemple en butée contre celui-ci, et une seconde partie 32 de l'actionneur mécanique 30 est liée au verre de façade 10.

Ainsi, le verre de façade 10 est mobile par rapport au dispositif de rétro-éclairage 20. Il est donc possible de déplacer le verre de façade 10 et le modulateur 12 par rapport au dispositif de rétro-éclairage 20. Ainsi, il est par exemple possible de déplacer uniquement le verre de façade 10 et le modulateur 12 par rapport à une structure solidaire du dispositif de rétro-éclairage 20, comme expliqué plus bas, c'est-à-dire sans déplacer le dispositif de rétro-éclairage 20.

Déplacer le verre de façade 10 avec le modulateur 12 et les garder fixe l'un par rapport à l'autre permet de ne pas dégrader la qualité de l'image, destinée à l'utilisateur, même lors des déplacements. En effet, l'adhésif optique 11 empêche par exemple la formation de bulles d'airs entre le verre de façade 10 et le modulateur 12.

La masse à faire vibrer pour effectuer le retour haptique, lorsque l'utilisateur touche la face avant 14 du verre de façade 10, est donc inférieure à la masse du dispositif d'affichage 1.

Par conséquent, pour une performance haptique prédéterminée, on peut prévoir un actionneur mécanique 30 de taille inférieure à la taille d'un actionneur mécanique nécessaire pour faire vibrer l'ensemble du dispositif d'affichage 1. On peut aussi prévoir, pour une taille d'actionneur mécanique déterminée, d'utiliser moins d'actionneurs mécaniques 30 que pour faire vibrer l'ensemble du dispositif d'affichage 1.

Ici, la rigidité élevée du carter de protection permet de transmettre de manière efficace, c'est-à-dire sans perte d'énergie, le mouvement de l'actionneur mécanique 30 au verre de façade 10 puisque l'actionneur mécanique 30 prend ici appui sur ce carter de protection. Le mouvement de l'actionneur mécanique 30 n'est pas absorbé par le dispositif de rétro-éclairage 20.

On peut aussi prévoir que l'actionneur mécanique 30 prenne appui sur une autre surface rigide, par exemple sur le tableau du bord du véhicule. On peut par exemple prévoir que l'actionneur mécanique 30 prenne appui sur une structure 60 supportant le dispositif d'affichage 1, comme cela est représenté en figure 2.

Un tel dispositif d'affichage 1 est compact et peut donc être intégré facilement à une planche de bord de véhicule. Un tel dispositif d'affichage 1 peut aussi permettre de réduire les coûts de fabrication en utilisant moins d'actionneurs mécaniques.

Ici, un courant électrique peut faire varier la longueur de l'actionneur mécanique 30, ici sa dimension selon la direction X. Ainsi, l'actionneur mécanique 30 peut déplacer le verre de façade 10, par rapport au dispositif de rétro-éclairage 20, dans le plan de référence XZ selon la direction X.

En variante, le courant électrique pourrait faire varier la forme de l'actionneur mécanique selon une autre direction du plan de référence ou selon une direction hors du plan de référence, par exemple orthogonale au plan de référence.

Comme expliqué en supra, le dispositif d'affichage 1 décrit ici comprend un seul actionneur mécanique 30 permettant un déplacement du verre de façade 10 dans une direction, ici la direction X. Bien entendu on peut prévoir un autre actionneur mécanique orienté dans une autre direction permettant un déplacement du verre de façade 10 dans cette autre direction, par exemple l'autre direction du plan de référence XZ orthogonale à la dernière, ici donc la direction Z.

Ici, l'actionneur mécanique 30 est un actionneur piézoélectrique. Les avantages d'un actionneur piézoélectrique sont notamment son faible encombrement et ses bonnes performances haptiques en termes d'accélération, de déplacement et de force. En variante, l'actionneur mécanique pourrait être un actionneur magnétique comprenant un solénoïde, un actionneur à mémoire de forme ou encore un muscle artificiel.

Comme le montre la figure 3, l'actionneur piézoélectrique 30 comprend une partie centrale 38 en céramique piézoélectrique. Lorsqu'une tension électrique est appliquée à la partie centrale 38, cette dernière se contracte, ici selon l'axe Z. Sous l'effet de cette contraction, deux parties latérales 39, chacune fixée aux deux extrémités de la partie centrale 38, se déforment élastiquement en s'écartant l'une de l'autre, ici selon l'axe X. Un tel actionneur piézoélectrique 30 est qualifié d' « amplifié » car le déplacement des parties latérales 39 selon l'axe X est supérieure à déformation de la céramique piézoélectrique de la partie centrale 38. Sur les figures 1 et 2, l'actionneur piézoélectrique 30 est représenté selon le plan de coupe A-A de la figure 3. Ici, les deux parties mobiles 31, 32 de l'actionneur mécanique 30 représentées sur les figures 1 et 2 correspondent aux deux parties latérales 39.

Comme le montre la figure 1, la première partie 31 de l'actionneur mécanique 30 est liée au dispositif de rétroéclairage 20 au niveau d'un bord périphérique 21. La seconde partie 32 de l'actionneur mécanique 30 quant à elle est liée au verre de façade 10 par l'intermédiaire d'un premier élément de liaison 40.

Le premier élément de liaison 40 est fixé à l'actionneur mécanique 30 par une première partie appelée premier bras 41. Le premier élément de liaison 40 est fixé, par exemple collé, au verre de façade 10 par une seconde partie appelée second bras 42.

Le premier élément de liaison 40 est rigide de manière à transmettre sans perte d'énergie le mouvement de l'actionneur mécanique 30 au verre de façade 10. Par exemple, le premier élément de liaison 40 peut être réalisé en plastique, par exemple en nylon, ou en métal.

Ici, le premier élément de liaison 40 possède un profil, selon le plan XY de la figure 1, en équerre. Cela signifie que le premier bras 41 et le second bras 42 forment un angle droit. Ce profil en équerre permet d'avoir des surfaces de contact entre le premier élément de liaison 40 et le verre de façade 10 et entre le premier élément de liaison 40 et l'actionneur mécanique 30 suffisantes pour avoir des fixations efficaces tout en minimisant l'encombrement du premier élément de liaison 40.

Comme le montre la figure 1, le dispositif d'affichage 1 comprend au moins un second élément de liaison 45 qui est fixé au verre de façade 10, et au moins un ressort 35 qui est en contact par une première extrémité 36 avec le dispositif de rétro-éclairage 20, ici au niveau de son bord périphérique 21, et par une seconde extrémité 37 avec le second élément de liaison 45.

Ici, le second élément de liaison 45 possède un profil en équerre. Ce profil en équerre permet d'avoir des surfaces de contact entre le second élément de liaison 45 et le verre de façade 10 et entre le second élément de liaison 45 et le ressort 35 suffisantes pour avoir des fixations efficaces tout en minimisant l'encombrement du second élément de liaison 45.

De la même façon que pour l'actionneur mécanique 30, le dispositif d'affichage 1 décrit ici comprend un seul ressort 35 et un seul second élément 45 associé. Bien entendu, le dispositif d'affichage 1 peut comprendre plusieurs ressorts 35, par exemple un ressort 35 par actionneur mécanique 30. En variante, on pourrait prévoir que le ressort 35 soit remplacé par un autre actionneur mécanique dont les déformations seraient opposées à celle de l'actionneur mécanique 30. Les actionneurs mécaniques pourraient être assemblés à force autour du dispositif de génération d'image pour créer une précontrainte.

Le ressort 35 possède deux extrémités 36, 37 mobiles l'une par rapport à l'autre : la première extrémité 36 est au contact du dispositif de rétro-éclairage 20, par exemple en butée contre ce dernier, la seconde extrémité 37 est en contact, ici fixée, au second élément de liaison 45. En variante, on pourrait prévoir que la première extrémité du ressort soit aussi fixée au dispositif de rétro-éclairage.

Le ressort 35 est disposé de manière à pré-contraindre l'actionneur mécanique 30 et/ou à ramener le verre de façade 10 à une position d'équilibre.

Ici, le ressort 35 est une lame en flexion. En variante, on pourrait prévoir que le ressort soit un bobinage d'une tige métallique.

Le ressort 35 et l'actionneur mécanique 30 sont placés de part et d'autre du dispositif de rétro-éclairage 20. Ici, le ressort 35 exerce une force qui a tendance à repousser le second élément de liaison 45 par rapport au dispositif de rétro-éclairage 20. De cette façon, l'actionneur mécanique 30 est précontraint entre le premier élément de liaison 40 et le dispositif de rétro-éclairage 20. La précontrainte permet de s'assurer qu'il n'y a pas de jeu au niveau de l'actionneur mécanique 30.

De plus, lorsque l'actionneur mécanique 30 est mis en mouvement et s'allonge pour déplacer le verre de façade 10, le ressort 35 exerce une force de rappel qui ramène le verre de façade 10 à une position d'équilibre. La position d'équilibre du verre de façade 10 est la position dans laquelle le verre de façade 10 se trouve lorsque l'actionneur mécanique 30 n'est pas en fonctionnement, c'est-à-dire lorsqu'il n'est pas alimenté par un courant électrique.

Dans le cas où le dispositif d'affichage 1 comprendrait plusieurs actionneurs mécaniques 30 et/ou plusieurs ressorts 35, on pourrait par exemple prévoir :
- un premier élément de liaison 40 par actionneur mécanique 30 et un second élément de liaison 45 par ressort 35 ;
- un unique élément de liaison 40, 45 entourant tout le bord périphérique 21 du dispositif de rétro-éclairage 20 ;
- des premiers éléments de liaison 40 et/ou des seconds éléments de liaison 45 reliant plusieurs actionneurs mécaniques 30 et/ou ressorts 35.

Dans ce cas, le dispositif d'affichage 1 comprend de préférence un premier élément de liaison 40 commun aux actionneurs mécaniques 30 et un second élément de liaison 45 commun aux ressorts 35.

Comme le montre la figure 1, un élément de protection 50 est situé entre le verre de façade 10 et le dispositif de rétro-éclairage 20. L'élément de protection 50 est disposé en périphérie du dispositif de rétro-éclairage 20. L'élément de protection 50 est au contact à la fois du dispositif de rétro-éclairage 20, à proximité de son bord périphérique 21, et de la face arrière 13 du verre de façade 10, sur une portion de la face arrière 13 non couverte par le modulateur 12.

L'élément de protection 50 a une forme adaptée à la périphérie du dispositif de rétro-éclairage 20. Ici par exemple, l'élément de protection 50 a une forme générale annulaire et une section rectangulaire. Ici, les dimensions de l'élément de protection 50 dans le plan YZ sont supérieures à celles du modulateur 12 et inférieures à celles du dispositif de rétro-éclairage 20. En d'autres termes, l'élément de protection 50 est un cadre qui entoure le modulateur 12.

Ici, l'élément de protection 50 est une mousse, par exemple une mousse polyester.

L'élément de protection 50 est fixé, par exemple collé, au dispositif de rétro-éclairage 20. L'élément de protection 50 glisse sur le verre de façade 10 lorsque celui-ci est en mouvement. Inversement, en variante, on pourrait prévoir que l'élément de protection soit collé au verre de façade et glisse sur le dispositif de rétro-éclairage.

L'élément de protection 50 empêche d'éventuelles poussières de pénétrer dans l'interstice entre le dispositif de rétro-éclairage 20 et le modulateur 12. L'élément de protection 50 empêche également les fuites de lumière, par exemple des faisceaux lumineux qui ne passeraient pas par le modulateur 12 et qui pourraient éblouir l'utilisateur.

Comme le montre la figure 2, le dispositif d'affichage 1 peut être supporté par une structure 60. Par « supporté par la structure 60 » en entend que le dispositif d'affichage 1 est maintenu solidaire de la structure 60, par exemple pour être globalement fixe dans un référentiel lié au véhicule. La structure 60 est par exemple une partie de la planche de bord du véhicule. Ici, la structure 60 forme un boîtier entourant le dispositif de rétro-éclairage 20, l'actionneur mécanique 30, le ressort 35 et les éléments de liaison 40, 45, et est ouverte au niveau du verre de façade 10.

Le dispositif de rétro-éclairage 20 est fixé à la structure 60. Ici, par exemple, des vis 61 solidarisent le dispositif de rétro-éclairage 20 à la structure 60.

Le dispositif d'affichage 1 comprend un élément souple conçu pour relier le verre de façade 10 à la structure 60. L'élément souple 70 est situé entre la structure 60 et le verre de façade 10. L'élément souple 70 est conçu pour permettre le mouvement du verre de façade 10 par rapport à la structure 60, le verre de façade 10 peut ainsi être déplacé par l'actionneur mécanique 30.

L'élément souple 70 supporte le verre de façade 10. En d'autres termes, l'élément souple 70 maintient le verre de façade 10 en position par rapport à la structure 60 et donc par rapport au dispositif de rétro-éclairage 20, tout en permettant le mouvement décrit ci-dessus.

En variante, on pourrait prévoir que le verre de façade soit directement supporté, par rapport au dispositif de rétro-éclairage, par l'actionneur mécanique et/ou le ressort. Pour cela, un ou des actionneurs mécaniques et un ou des ressorts, spécifiquement conçus pour assurer un maintien, pourraient être répartis aux quatre coins du dispositif d'affichage. L'actionneur mécanique et/ou le ressort seraient alors fixés au dispositif de rétro-éclairage. L'élément souple et la structure ne seraient alors plus nécessaires au maintien du verre de façade. Le dispositif de rétro-éclairage pourrait être directement fixé à un support par exemple une planche de bord de véhicule.

L'élément souple 70 a une forme adaptée à la périphérie du verre de façade 10. Ici, par exemple, l'élément souple 70 a une forme générale annulaire et une section rectangulaire. Ici, les dimensions de l'élément souple 70 dans le plan YZ sont inférieures à celles du verre de façade 10. En d'autres termes l'élément souple 70 est un cadre qui entoure le dispositif de rétro-éclairage 20 et les éléments de liaison 40, 45. L'épaisseur de l'élément souple 70, ici sa dimension selon la direction Y, est très inférieure à sa largeur et à sa longueur, ici ses dimensions dans le plan de référence XZ.

Ici, l'élément souple 70 en silicone.

Pour maintenir le verre de façade 10 par rapport à la structure 60, l'élément souple 70 est fixé à la fois à la structure 60 et au verre de façade 10. L'élément souple 70 est par exemple collé, avec une colle ou une résine, par chacune de ses deux faces principales respectivement à la structure 60 et au verre de façade 10.

Les dimensions et les propriétés mécaniques de l'élément souple 70, par exemple son épaisseur et/ou son module d'Young, sont déterminées de telle sorte que l'élément souple 70 puisse d'une part maintenir le verre de façade 10 et d'autre part se déformer tout en restant en régime élastique, lorsque l'actionneur mécanique 30 met en mouvement le verre de façade 10 par rapport au dispositif de rétro-éclairage 20 et donc par rapport à la structure 60.

Par exemple, la raideur de l'élément souple 70 est comprise entre 5 et 50 N/mm, de préférence entre 5 et 25 N/mm. Par exemple, l'épaisseur de l'élément souple 70 est comprise entre 0,2 mm et 3 mm, de préférence entre 0,2 mm et 1,5 mm.

En particulier, l'élément souple 70 est agencé de manière à rester dans un régime de déformation élastique lorsque le verre de façade 10 subit une accélération d'au moins 6 G et un déplacement, par exemple dans le plan de référence XZ, d'au moins 100 micromètres par rapport à la structure 60. L'élément souple est donc agencé pour ne pas subir de déformation plastique lorsque le verre de façade 10 est en mouvement. Dans ce contexte, une déformation élastique est une déformation réversible. L'élément souple 70 retrouve sa forme initiale après le déplacement du verre de façade 10.

Comme le montre la figure 2, le dispositif d'affichage 1 comprend au moins un capteur de force 80 conçu pour détecter le contact d'un doigt de l'utilisateur sur la face avant 14 du verre de façade 10. De multiples technologies de capteurs de force peuvent être implémentées dans le dispositif d'affichage 1. Ainsi, on pourrait prévoir un capteur inductif, un capteur résistif ou encore un capteur optique. Ici, le ou les capteurs de forces 80 sont des jauges de contraintes.

Ici, comme le montre la figure 2, deux capteurs de force 80 sont utilisés. On pourrait prévoir que le dispositif d'affichage 1 comprenne plus que deux capteurs de force, par exemple quatre capteurs de force répartis dans les coins du dispositif d'affichage 1.

Chaque capteur de force 80 est conçu pour détecter un déplacement du verre de façade 10 hors du plan de référence XZ. Chaque capteur de force 80 est notamment conçu pour mesurer une force exercée sur le verre de façade 10. Ici, chaque capteur de force 80 mesure la composante dans la direction perpendiculaire au plan de référence XZ, i.e. ici dans la direction Y, d'une force exercée sur le verre de façade 10.

Chaque capteur de force 80 est calibré pour déclencher le retour haptique, c'est-à-dire le déplacement du verre de façade 10 par l'actionneur mécanique 30, lorsque l'utilisateur exerce une force suffisante sur le verre de façade 10. Cela permet d'éviter les fausses détections. La calibration d'un seuil de déclenchement pour le retour haptique peut se faire par l'utilisateur grâce à un logiciel dédié.

Les capteurs de force 80 peuvent aussi permettre de localiser la zone de contact entre le doigt de l'utilisateur et le verre de façade 10, par exemple par triangulation.

En variante, la localisation de la zone de contact est réalisée par une dalle tactile 15 transparente dédiée, de type résistif ou capacitif. Une telle dalle tactile 15 peut par exemple comprendre une couche d'oxyde d'indium-étain.

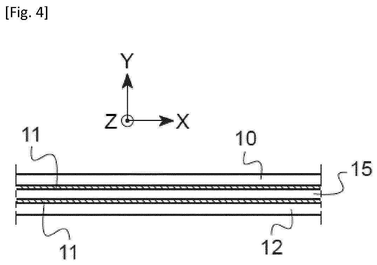

Comme le montre la figure 4, une telle dalle tactile 15 peut être localisée entre le verre de façade 10 et le modulateur 12. Ici, deux couches d'adhésif optique 11 permettent de coller respectivement la dalle tactile 15 au verre de façade 10 et la dalle tactile 15 au modulateur 12. En variante, la dalle tactile pourrait être disposée sur le verre de façade 10, en tant que couche externe, on pourrait alors parler de surface tactile.

Les deux capteurs de force 80 sont disposés entre le verre de façade 10 et la structure 60. Les deux capteurs de forces 80 sont disposés à proximité de l'élément souple 70. Un support élastomère est situé entre le capteur de force 80 et la structure 60. Le support élastomère est par exemple collé à la structure 60. Le support élastomère est agencé pour assurer une précharge sur le capteur de force 80. En pratique, la dureté de ce support est comprise entre 60 shores et 80 shores pour avoir une transmission efficace du mouvement du verre de façade 10 au capteur de force 80 et donc une bonne sensibilité.

Ici, le contact entre chaque capteur de force 80 et le verre de façade 10 est glissant pour s'adapter aux déplacements du le verre de façade 10. En variante, le contact pourrait être assuré par un ruban adhésif double face.

Un film en téflon 90 peut être disposé à la surface du dispositif de rétro-éclairage 20, sur la portion du dispositif de rétro-éclairage 20 en contact avec l'actionneur mécanique 30. Le film en téflon 90 permet à l'actionneur mécanique 30 de glisser contre le dispositif de rétro-éclairage 20 avec le moins de frottement possible.

Minimiser les frottements peut être utile par exemple lorsque l'utilisateur exerce une force sur le verre de façade 10. En effet, cela déplace légèrement le verre de façade 10, principalement dans une direction orthogonale au plan de référence XZ, ce qui déplace également légèrement l'actionneur mécanique 30. Grâce au film en téflon 90, l'actionneur mécanique 30 n'exerce que très peu de résistance au déplacement du verre de façade 10 et ne perturbe donc pas le fonctionnement des capteurs de force 80.

De plus, un tel dispositif d'affichage 1 peut être conçu avec épaisseur totale inférieure à 15 mm. Cela permet de l'intégrer dans de nombreuses applications telles qu'une planche de bord de véhicule ou plus généralement un écran de commande d'un appareil électronique, par exemple un échographe ou un distributeur de billet.

## Revendications

1. Dispositif d'affichage (1) comprenant :
- un verre de façade (10) ;
- un dispositif de rétro-éclairage (20), conçu pour générer un faisceau lumineux source ;
- un modulateur (12), solidaire dudit verre de façade (10) et situé entre ledit verre de façade (10) et ledit dispositif de rétro-éclairage (20) de manière à recevoir ledit faisceau lumineux source et à transmettre un faisceau lumineux modulé à travers ledit verre de façade (10) ; et
- au moins un actionneur mécanique (30) comprenant une première partie (31) et une seconde partie (32) mobiles l'une par rapport à l'autre, la première partie (31) étant au contact du dispositif de rétroéclairage et la seconde partie (32) étant liée au verre de façade ;
- ledit actionneur mécanique (30) étant disposé de façon à pouvoir déplacer ledit verre de façade (10) par rapport audit dispositif de rétro-éclairage (20).

2. Dispositif d'affichage (1) selon la revendication 1, dans lequel ledit actionneur mécanique (30) est un actionneur piézoélectrique.

3. Dispositif d'affichage (1) selon l'une des revendications 1 à 2, comprenant un premier élément de liaison (40) fixé par une première partie (41) audit actionneur mécanique (30) et fixé par une seconde partie (42) audit verre de façade (10).

4. Dispositif d'affichage (1) selon la revendication 3, dans lequel ledit premier élément de liaison (40) possède un profil formant deux bras (41 ; 42) en équerre, ledit actionneur mécanique (30) étant fixé à un premier bras (41) et ledit verre de façade (10) étant fixé à un second bras (42).

5. Dispositif d'affichage (1) selon l'une des revendications 1 à 4, dans lequel ledit modulateur (12) est collé audit verre de façade (10) par un adhésif optique (11).

6. Dispositif d'affichage (1) selon l'une des revendications 1 à 5, comprenant en outre :
- au moins un second élément de liaison (45) fixé audit verre de façade (10) ; et
- au moins un ressort (35), en contact par une première extrémité (36) avec ledit dispositif de rétro-éclairage (20) et par une seconde extrémité (37) avec ledit second élément de liaison (45), de manière à pré-contraindre ledit actionneur mécanique (30) ou à ramener ledit verre de façade (10) à une position d'équilibre.

7. Dispositif d'affichage (1) selon la revendication 6, dans lequel ledit second élément de liaison (45) possède un profil en équerre.

8. Dispositif d'affichage (1) selon l'une des revendications 1 à 7, dans lequel un élément de protection (50) est disposé en périphérie dudit dispositif de rétro-éclairage (20), entre ledit dispositif de rétro-éclairage (20) et ledit verre de façade (10).

9. Dispositif d'affichage (1) selon l'une des revendications 1 à 8, dans lequel ledit dispositif de rétro-éclairage (20) comprend un carter réalisé en magnésium.

10. Dispositif d'affichage selon l'une des revendications 1 à 9, comprenant une surface en téflon (90) entre ledit actionneur mécanique (30) et ledit dispositif de rétro-éclairage (20).

11. Dispositif d'affichage (1) selon l'une des revendications 1 à 10, ledit dispositif d'affichage (1) comprenant un élément souple (70) conçu pour relier ledit verre de façade (10) à une structure (60) et pour permettre le mouvement dudit verre de façade (10) par rapport à ladite structure (60).

12. Dispositif d'affichage (1) selon la revendication 11, dans lequel ledit élément souple (70) est en silicone.

13. Dispositif d'affichage (1) selon l'une des revendications 11 à 12, dans lequel ledit élément souple (70) est agencé de manière à rester dans un régime de déformation élastique lorsque ledit verre de façade (10) subit une accélération d'au moins 6 G et un déplacement d'au moins 100 micromètres par rapport à ladite structure (60).

14. Dispositif d'affichage (1) selon l'une des revendications 11 à 13, comprenant au moins un capteur (80), disposé entre ledit verre de façade (10) et ladite structure (60), et conçu pour mesurer une force exercée sur ledit verre de façade (10).

## Patentansprüche

1. Anzeigevorrichtung (1) mit:
- ein Frontglas (10);
- eine Hintergrundbeleuchtungseinrichtung (20), die dazu ausgelegt ist, einen Lichtstrahl zu erzeugen;
- einen Modulator (12), der fest mit dem Frontglas (10) verbunden ist und sich zwischen dem Frontglas (10) und der Hintergrundbeleuchtungseinrichtung (20) angeordnet ist, um den Lichtstrahl der Lichtquelle zu empfangen und einen modulierten Lichtstrahl durch das Frontglas (10) zu übertragen; und
- mindestens ein mechanisches Stellglied (30) mit einem ersten Teil (31) und einem zweiten Teil (32), die relativ zueinander beweglich sind, wobei der erste Teil (31) mit der Hintergrundbeleuchtungseinrichtung in Kontakt steht und der zweite Teil (32) mit dem Frontglas verbunden ist;
- wobei der mechanische Aktuator (30) so angeordnet ist, dass er die Frontscheibe (10) relativ zu der Hintergrundbeleuchtungseinrichtung (20) bewegen kann.

2. Anzeigevorrichtung (1) nach Anspruch 1, wobei der mechanische Aktuator (30) ein piezoelektrischer Aktuator ist.

3. Anzeigevorrichtung (1) nach einem der Ansprüche 1 bis 2, mit einem ersten Verbindungselement (40), das mit einem ersten Teil (41) an dem mechanischen Stellglied (30) befestigt ist und mit einem zweiten Abschnitt (42) an dem Frontglas (10) befestigt ist.

4. Anzeigevorrichtung (1) gemäß Anspruch 3, wobei das erste Verbindungselement (40) ein Profil aufweist, das zwei rechtwinklige Arme (41; 42) bildet, wobei der mechanische Aktuator (30) an einem ersten Arm (41) befestigt ist und das Frontglas (10) an einem zweiten Arm (42) befestigt ist.

5. Anzeigevorrichtung (1) gemäß einem der Ansprüche 1 bis 4, wobei der Modulator (12) mit einem optischen Klebstoff (11) an das Frontglas (10) geklebt ist.

6. Anzeigevorrichtung (1) nach einem der Ansprüche 1 bis 5, die außerdem umfasst:
- mindestens ein zweites Verbindungselement (45), das an dem Frontglas (10) befestigt ist; und
- mindestens eine Feder (35), die mit einem ersten Ende (36) mit der intergrundbeleuchtungsvorrichtung (20) und mit einem zweiten Ende (37) mit dem zweiten Verbindungselement (45) in Kontakt steht, um den mechanischen Aktuator (30) vorzuspannen oder das Frontglas (10) in eine Gleichgewichtsposition zurückzubringen.

7. Anzeigevorrichtung (1) gemäß Anspruch 6, wobei das zweite Verbindungselement (45) ein rechtwinkliges Profil aufweist.

8. Anzeigevorrichtung (1) nach einem der Ansprüche 1 bis 7, wobei ein Schutzelement (50) am Umfang der Hintergrundbeleuchtungseinrichtung (20) zwischen der Hintergrundbeleuchtungseinrichtung (20) und dem Frontglas (10) angeordnet ist.

9. Anzeigevorrichtung (1) nach einem der Ansprüche 1 bis 8, wobei die Hintergrundbeleuchtungseinrichtung (20) ein Gehäuse aus Magnesium umfasst.

10. Anzeigevorrichtung gemäß einem der Ansprüche 1 bis 9, umfassend eine Teflonoberfläche (90) zwischen dem mechanischen Betätigungselement (30) und der Hintergrundbeleuchtungsvorrichtung (20).

11. Anzeigevorrichtung (1) gemäß einem der Ansprüche 1 bis 10, wobei die Anzeigevorrichtung (1) ein flexibles Element (70) umfasst, das dazu ausgelegt ist, das Frontglas (10) mit einer Struktur (60) zu verbinden und eine Bewegung des Frontglases (10) relativ zu der Struktur (60) zu ermöglichen.

12. Anzeigevorrichtung (1) nach Anspruch 11, wobei das flexible Element (70) aus Silikon besteht.

13. Anzeigevorrichtung (1) nach einem der Ansprüche 11 bis 12, wobei das flexible Element (70) so angeordnet ist, dass es in einem elastischen Verformungsbereich bleibt, wenn das Frontglas (10) einer Beschleunigung von mindestens 6 G und einer Verschiebung von mindestens 100 Mikrometern relativ zu der Struktur (60)

14. Anzeigevorrichtung (1) gemäß einem der Ansprüche 11 bis 13, umfassend mindestens einen Sensor (80), der zwischen dem Frontglas (10) und der Struktur (60) angeordnet ist und dazu ausgelegt ist, eine auf das Frontglas (10) ausgeübte Kraft zu messen.

## Claims

1. A display device (1) comprising:
- a front glass (10) ;
- a backlighting device (20), designed to generate a source light beam ;
- a modulator (12), integral with said front glass (10) and located between said front glass (10) and said backlighting device (20) so as to receive said source light beam and transmit a modulated light beam through said front glass (10); and
- at least one mechanical actuator (30) comprising a first part (31) and a second part (32) movable relative to each other, the first part (31) being in contact with the backlighting device and the second part (32) being connected to the front glass;
- said mechanical actuator (30) being arranged to move said front glass (10) relative to said backlighting device (20).

2. A display device (1) according to claim 1, wherein said mechanical actuator (30) is a piezoelectric actuator.

3. Display device (1) according to one of claims 1 to 2, comprising a first connecting element (40) fixed by a first part (41) to said mechanical actuator (30) and attached by a second part (42) to said front glass (10).

4. Display device (1) according to claim 3, wherein said first connecting element (40) has a profile forming two angled arms (41; 42), said mechanical actuator (30) being attached to a first arm (41) and said front glass (10) being attached to a second arm (42).

5. A display device (1) according to any of claims 1 to 4, wherein said modulator (12) is bonded to said front glass (10) by an optical adhesive (11).

6. Display device (1) according to one of claims 1 to 5, further comprising :
- at least one second connecting element (45) attached to said front glass (10); and
- at least one spring (35), in contact by a first end (36) with said backlighting device (20) and by a second end (37) with said second connecting element (45), so as to pre-stress said mechanical actuator (30) or to return said front glass (10) to an equilibrium position.

7. A display device (1) according to claim 6, wherein said second connecting element (45) has a square profile.

8. A display device (1) according to any of claims 1 to 7, wherein a protective member (50) is disposed at the periphery of said backlight device (20), between said backlight device (20) and said front glass (10).

9. Display device (1) according to one of claims 1 to 8, wherein said backlight device (20) comprises a housing made of magnesium.

10. Display device according to one of claims 1 to 9, comprising a Teflon surface (90) between said mechanical actuator (30) and said backlight device (20).

11. Display device (1) according to one of claims 1 to 10, said display device (1) comprising a flexible element (70) designed to connect said front glass (10) to a structure (60) and to allow movement of said front glass (10) relative to said structure (60).

12. Display device (1) according to claim 11, wherein said flexible element (70) is made of silicone.

13. Display device (1) according to one of claims 11 to 12, wherein said flexible element (70) is arranged so as to remain in an elastic deformation regime when said front glass (10) undergoes an acceleration of at least 6 G and a displacement of at least 100 micrometers relative to said structure (60).

14. Display device (1) according to one of claims 11 to 13, comprising at least one sensor (80), arranged between said front glass (10) and said structure (60), and designed to measure a force exerted on said front glass (10).
